# EUROPÄISCHE PATENTANMELDUNG

(11) **EP 1 020 508 A2**
(43) Veröffentlichungstag der Anmeldung: **19.07.2000**
(21) Anmeldenummer: 00200050.3
(22) Anmeldetag: 07.01.2000
(51) Int. Cl.: C09K 11/02

(54) **Bildschirm mit metalloxidhaltiger Leuchtstoffzubereitung**

(30) Priorität: 16.01.1999 DE 19901538
(71) Anmelder: Philips Corporate Intellectual Property GmbH, 52064 Aachen (DE); Koninklijke Philips Electronics N.V., 5621 BA Eindhoven (NL)
(72) Erfinder: Picht, Friederike, Philips Corp. Intel. Prop. GmbH, 52064 Aachen (DE); Czarnojan, Wolfram, Philips Cor. Intel. Prop. GmbH, 52064 Aachen (DE); Jungk, Hans-Otto, Philips Corp. Intel. Prop. GmbH, 52064 Aachen (DE); van Iersel, Gerard H.J., 52064 Aachen (DE); Boutelje, Miguel, Philips Corp. Intell. Prop. GmbH, 52064 Aachen (DE); Cobben, Pierre L.H.M., 52064 Aachen (DE); van Weert, Mark, Philips Corp. Intell. Prop. GmbH, 85064 Aachen (DE)
(74) Vertreter: Gössmann, Klemens

(57) **Zusammenfassung**

Ein Bildschirm mit einer Leuchtstoffzubereitung, die einen Leuchtstoff und eine Leuchtstoffbeschichtung mit einer Gruppe von Metall-Sauerstoff-Verbindungen umfaßt, wobei die Gruppe der Metall-Sauerstoff-Verbindungen eine Yttrium-Sauerstoffverbindung enthält, zeichnet sich durch eine überraschend verbesserte Bildschirmhelligkeit, Farbreinheit und Haftung der Leuchtstoffzubereitung auf dem Bildschirmglas aus Die Leuchtstoffschicht zeigt eine hohe Packungsdichte des Leuchtstoffmaterials. Die Leuchtstoffschicht weist eine gute Homogenität auf und ist frei von 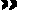 Nadelstich"-Löchern. Außerdem ist die strukturierte Leuchtstoffschicht scharf konturiert.

## Beschreibung

Die Erfindung betrifft einen Bildschirm, insbesondere einen Bildschirm für eine Kathodenstrahlröhre, mir einer Leuchtstoffzubereitung, die einen Leuchtstoff und eine Leuchtstoffbeschichtung mit einer Gruppe von Metall-Sauerstoff-Verbindungen umfaßt.

Bildschirme für Kathodenstrahlröhren haben auf der Innenseite eine strukturierte Bildschirmbeschichtung, die in punkt- oder streifenförmigen Bildpunkten eine Leuchtstoffzubereitung enthält. Die Bildpunkte sind jeweils in Tripeln angeordnet. Jedes Tripel enthält je einen Bildpunkt mit einem Leuchtstoff für die drei Grundemissionsfarben Rot, Blau und Grün. Die Bildschirmbeschichtung wird üblicherweise in einem photochemischen Verfahren auf das Schirmglas aufgebracht. Bei der naßchemischen Variante des photochemischen Verfahrens wird eine photosensitive Leuchtstoffsuspension verwendet, die den Leuchtstoff zusammen mit Ammoniumdichromat als der photoaktiven Komponente in einer Polyvinylalkohol-Lösung enthält, die bei Belichtung über eine Schattenmaske aushärter. Bei der trockenen Variante des photochemischen Verfahrens werden photosensitive Lacke verwendet, die bei Belichtung klebrig werden. Die trockenen Leuchtstoffpulver bleiben nach der Belichtung über eine Schattenmaske an den klebenden Lackflächen haften.

In einer Bildschirmbeschichtung soll eine hohe Packungsdichte für die Leuchtstoffe erreicht werden, damit der Bildschirm eine optimale Helligkeit erreicht. Außerdem soll der Leuchtstoff in der Bildschirmbeschichtung homogen verteilt sein, d.h. die photosensitiven Leuchtstoffsuspensionen dürfen beim Auftrocknen weder Schlieren noch 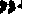 Nadelstich"-Löcher bilden. Die einzelnen Bildpunkte in der Bildschirmbeschichtung sollen scharfe Konturen haben und die Schattenmasken-Struktur präzise wiedergeben. Die Farben der Leuchtstoffe sollen bei dem Beschichtungsverfahren farbrein erhalten bleiben. Weiterhin soll die Bildschirmbeschichtung gut haften und in den nicht belichteten Bereichen des Bildschirms sollen sich keine Schleier bilden.

Voraussetzung für eine gute Bildschirmbeschichtung ist u.a. eine Leuchtstoffzubereitung, die sich gut verarbeiten läßt. Die Leuchtstoffzubereitung soll ein gutes Siebverhalten und hohe Dispersibilität zeigen. In Suspension soll die Leuchtstoffzubereitung eine stabile Teilchengrößenverteilung zeigen und in allen pH-Bereichen leicht filtrierbar sein.

Um die Eigenschaften der Leuchtstoffzubereitung an die Anforderungen des Herstellungsverfahrens für Kathodenstrahlröhren anzupassen, ist es üblich, die Leuchtstoffpulver mit Materialien zu beschichten, die die erwünschten technologischen Eigenschaften der Leuchtstoffzubereitung sicherstellen sollen.

Aus EP-A-0 432 500 ist ein Leuchtstoff für Kathodenstrahlröhren bekannt, der Leuchtstoffpartikel, eine erste Schicht auf der Oberfläche der Leuchtstoffpartikel, die aus einem im wesentlichen gleichmäßigen SiO₂ - Film besteht und einer zweiten Schicht auf der ersten Schicht, die wenigstens ein Metall ausgewählt aus der Gruppe, bestehend aus Zn, Al und den Erdalkalimetallen und wenigstens einem Element der Gruppe, bestehend aus kolloidalem Siliziumoxid, Aluminiumoxid-Sol und Titanoxid-Sol mit einer Teilchengröße von ≤ 50 nm, enthält.

Es werden jedoch zunehmend höhere Anforderungen an die Qualität von Bildschirmen in bezug auf Helligkeit, Farbreinheit, Schleierfreiheit und Konturenschärfe gestellt. Entsprechend erhöhen sich auch die Anforderungen an die Qualität der Leuchtstoffzubereitungen.

Es ist daher die Aufgabe der vorliegenden Erfindung, einen Bildschirm zur Verfügung zu stellen, der sich durch erhöhte Helligkeit, reinere Farben, Schleierfreiheit und schärfere Konturen auszeichnet.

Erfindungsgemäß wird die Aufgabe durch einen Bildschirm mit einer Leuchtstoffzubereitung, die einen Leuchtstoff und eine Leuchtstoffbeschichtung mit einer Gruppe von Metall-Sauerstoff-Verbindungen umfaßt, wobei die Gruppe der Metall-Sauerstoff-Verbindungen eine Yttrium-Sauerstoffverbindung enthält, gelöst. Ein derartiger Bildschirm zeichnet sich durch eine überraschend verbesserte Bildschirmhelligkeit, Farbreinheit und Haftung der Leuchtstoffzubereitung auf dem Bildschirmglas aus Die Leuchtstoffschicht zeigt eine hohe Packungsdichte des Leuchtstoffmaterials. Die Leuchtstoffschicht weist eine gute Homogenität auf und ist frei von 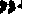 Nadelstich"-Löchern. Außerdem ist die struktuierte Leuchtstoffschicht scharf konturiert.

Die Gruppe der Metall-Sauerstoff-Verbindungen kann eine Zink-Sauerstoff-Verbindung enthalten.

Die Gruppe der Metall-Sauerstoff-Verbindungen kann auch eine Erdalkalimetall-Sauerstoffverbindung enthalten.

Die Gruppe der Metall-Sauerstoff-Verbindungen kann auch eine Silizium-Sauerstoffverbindung enthalten.

Im Rahmen der vorliegenden Erfindung ist es besonders bevorzugt, daß die Leuchtstoffzubereitung Yttriumoxid, Zinkoxid und ein kolloidales Siliziumoxid enthält.

Es kann auch bevorzugt sein, daß die Leuchtstoffzubereitung 0.01 bis 0.50 Gew.-% Yttrium-Sauerstoff-Verbindung bezogen auf den Leuchtstoffanteil enthält.

Es kann weiterhin bevorzugt sein, daß die Leuchtstoffzubereitung 0.01 bis 0.50 Gew.-% einer Erdalkalimetall-Sauerstoff-Verbindung, bezogen auf den Leuchtstoffanteil, 0.01 bis 0.50 Gew.-% einer Zink-Sauerstoff-Verbindung, bezogen auf den Leuchtstoffanteil, 0.01 bis 0.50 Gew.-% einer Yttrium-Sauerstoff-Verbindung, bezogen auf den Leuchtstoffanteil, und 0.01 bis 1.0 Gew.-% einer Silizium-Sauerstoff-Verbindung, bezogen auf den Leuchtstoffanteil, enthält.

Die Erfindung betrifft auch eine Leuchtstoffzubereitung, die einen Leuchtstoff und eine Leuchtstoffbeschichtung mit einer Gruppe von Metall-Sauerstoff-Verbindungen umfaßt, wobei die Gruppe der Metall-Sauerstoff-Verbindungen Yttriumoxid enthält.

Nachfolgend wird die Erfindung anhand von einer Figur und drei Ausführungsbeispielen weiter erläutert.

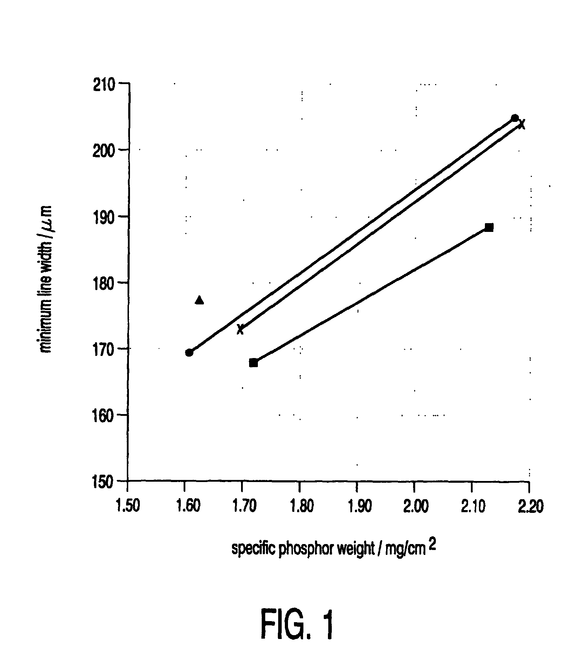

**Fig. 1** zeigt die Haftung einer Leuchtstoffzubereitung mit Yttriumoxid im Vergleich zu drei Leuchtstoffzubereitungen ohne Yttriumoxid.

Ein Bildschirm nach der Erfindung weist eine Leuchtstoffschicht auf, die eine Leuchtstoffzubereitung enthält, die einen Leuchtstoff und eine Leuchtstoffbeschichtung, mit der der Leuchtstoff beschichtet ist, umfaßt.

Für die erfindungsgemäße Leuchtstoffzubereitung können alle üblichen Leuchtstoffe verwendet werden, z.B. blaues ZnS:Ag,Al, blaues ZnS:Ag,Cl, grünes ZnS:Cu,Au,Al, grünes ZnS:Cu,Al oder rotes Y2O2S:Eu. Das Ausgangsmaterial kann auch ein bereits pigmentierter Leuchtstoff sein, der zur Verbesserung des Bildkontrastes mit Farbfilterpigmenten beschichtet ist. Derartige pigmentierte Leuchtstoffe sind z.B. mit CoAl₂O₄ pigmentiertes ZnS:Ag,Al oder mit Fe₂O₃ pigmentiertes Y₂O₂S:Eu. Das Farbfilterpigment kann entweder zusammen mir der Leuchtstoffbeschichtung in einem einzigen Beschichtungsprozeß aufgebracht werden und eine separate Beschichtungsschicht bilden.

Die Leuchtstoffbeschichtung enthält eine Gruppe von Metall-Sauerstoff-Verbindungen, die eine Yttrium-Sauerstoff-Verbindung enthält. Im Rahmen der vorliegenden Erfindung sollen unter "Metall-Sauerstoff-Verbindungen" die Hydroxide und Oxide des entsprechenden Metalls verstanden werden. Die Gruppe der Metall-Sauerstoff-Verbindungen kann auch eine Zink-Sauerstoff-Verbindung und eine Erdalkalimetall-Sauerstoff-Verbindung enthalten. Die Leuchtstoffbeschichtung enthält bevorzugt weiterhin eine Silizium-Sauerstoff-Verbindung, z. B. Siliziumdioxid, das als feinteilige kolloidale SiO₂-Partikel mit einer Teilchengröße 4 nm ≤ d ≤ 30 nm oder als grobteilige kolloidale SiO₂ -Partikel mit einer mittleren Teilchengröße 50 nm ≤ d ≤ 150 nm vorliegen kann. Die Leuchtstoffbeschichtung kann gegebenenfalls einen oder mehrere wasserlösliche organische Binder enthalten, z.B. anionische Bindet wie Polyacrylate und Alginate, Binder mit nichtionische Amid- und Urethangruppen wie Polyurethane, Polyacrylamide, Polyamidharze, veretherte Melamin- und Melamin-Formaldehydverbindungen, veretherte Harnstoff-Formaldehyd-Harze oder Gelatine. Das Gewichtsverhältnis von Leuchtstoffbeschichtung zu Leuchtstoff in der Leuchtstoffzubereitung kann bevorzugt 0.10 Gew.-% bis 2.0 Gew.-% betragen.

Die Leuchtstoffzubereitung kann hergestellt werden, indem nacheinander die folgenden Verfahrensschritte durchgeführt werden:
a) Zunächst wird eine Aufschlämmung eines Leuchtstoffes in Wasser mit verdünntem Ammoniak auf mindestens pH 9 eingestellt. Im anschließenden naßchemischen Mahlprozeß wird der Leuchtstoff dispergiert. Als Dispergiermittel kann ein Silikat, z.B. Kalium-Wasserglas, oder ein feinteiligen SiO₂ -Kolloid mit einer Teilchengröße 4 nm ≤ d ≤ 30 nm verwendet werden. Die Menge des ionischen oder feinteiligen Siliziumdioxid (berechnet als SiO₂) kann bevorzugt 0.010 Gew.-% bis 0.15 Gew.-% bezogen auf den Leuchtstoff betragen. Es kann auch ein anderes Dispergiermittel verwendet werden, z.B. ein Polycarboxylat. Gegebenenfalls kann gleichzeitig mit dem Mahlen des Leuchtstoffes die naßchemische Pigmentierung des Leuchtstoffes durchgeführt werden, indem z.B. eine mit Polyacrylat stabilisierte Pigmentsuspension der wäßrigen Leuchtstoff-Aufschlämmung hinzugefügt wird und der Leuchtstoff zusammen mit der Pigmentsuspension ohne Hinzufügen eines weiteren Dispergiermittels vermahlen wird.
b) Zu dem dispergierten Leuchtstoff können wäßrige Lösungen eines oder mehrerer organischer Binder hinzugefügt werden. Die Gesamtmenge des organischen Bindermaterials kann 0.010 Gew.-% bis 0.50 Gew.-% bezogen auf den Leuchtstoff betragen. Der Leuchtstoff-Aufschlämmung kann die Lösung eines grobteiligen SiO₂-Kolloids mit einer mittleren Partikelgröße 50 nm ≤ d ≤ 150 nm entsprechend einer spezifischen Oberfläche von 25 m²/g ≤ Aₛ ≤ 70 m²/g hinzugefügt werden. Die Menge dieses grobteiligen SiO₂-Kolloids (berechnet als SiO₂) beträgt üblicherweise 0.01 Gew.-% bis 1.0 Gew.-% bezogen auf den Leuchtstoff. Das grobteilige SiO₂-Kolloid kann zuvor mit einer Lösung einer Yttriumverbindung, die beim Erhitzen Y₂O₃ bildet, z.B. Yttriumnitrat oder Yttriumchlorid, gemischt werden. Dabei beträgt das Gewichtsverhältnis des Siliziumdioxids (berechnet als SiO₂) zu der Yttriumverbindung (berechnet als Y₂O₃) üblicherweise 2:1 bis 5:1. Anschließend wird dann das mit Yttrium modifizierte SiO2-Kolloid der Leuchtstoff-Aufschlämmung hinzugefügt. Gegebenenfalls kann in Verfahrensschritt b) auch die naßchemische Pigmentierung des Leuchtstoffes durch Zugabe einer z.B. mit Polyacrylat dispergierten Pigmentsuspension durchgeführt werden. Die Zugabe von organischen Binderkomponenten, des kolloidalen SiO2 sowie des Pigments kann in beliebiger Reihenfolge stattfinden.
c) Eine oder mehrere wäßrige Salzlösungen eines oder mehrerer der Elemente ausgewählt aus der Gruppe der Erdalkalielemente, des Zink und des Yttrium, z.B. ihre Nitrate, Chloride und Acetate werden der Leuchtstoff-Aufschlämmung hinzugefügt. Dabei beträgt das Gewichtsverhältnis des Siliciumdioxid zu der Gesamtmenge der Metalloxide üblicherweise 1:2 bis 10:1.
d) Mit verdünnten Säure, z.B. HNO₃, H₂SO₄, HCl oder CH₃COOH wird der pH-Wert der Leuchtstoff-Aufschlämmung auf mindestens pH 6 abgesenkt, falls dieser Wert noch nicht erreicht ist.
e) Mit ammoniakalischer Lösung, verdünnter Kalilauge oder Natronlauge wird der pH-Wert der Leuchtstoff-Aufschlämmung auf mindestens pH 8.0 angehoben.
f) Den so beschichteten Leuchtstoff läßt man sedimentieren. Es wird dekantiert, gegebenenfalls gewaschen und abfiltriert.
g) Bei 110 bis 200 °C wird die Leuchtstoffzubereitung an Luft einige Stunden getrocknet.

Der Bildschirm kann z.B. nach dem "Flowcoating" Verfahren mit der Leuchtstoffzubereitung beschichtet werden. Die Leuchtstoffzubereitung mit einem Leuchtstoff einer Emissionsfarbe wird dabei in einer mittels Ammoniumdichromat (ADC) photoaktivierten Binderlösung suspendiert. Die einzelnen Komponenten der Leuchtstoffsuspension, d.h. Leuchtstoffpulver, Wasser, Binder, Dispergiermittel, Stabilisator und lichtempfindliche Komponente werden abhängig von dem jeweiligen Leuchtstoff und den Verarbeitungsbedingungen der Suspension im Bildschirmprozeß in vorgegebener Reihenfolge und Konzentration nach einer definierten Rezeptur gemischt. Die Suspension der Leuchtstoffzubereitung wird auf die Innenseite der in der "Flowcoat"-Maschine rotierenden vorbereiteten Bildschirmglasplatte aufgebracht. Durch die Rotation des Bildschirmes erteilt sich die Leuchtstoffsuspension gleichmäßig auf dem Bildschirm. überschüssige Suspension wird abgeschleudert. Die gebildete feuchte Leuchtstoffschicht wird getrocknet. Auf der Innenseite der Bildschirmglasplatte wird eine Schattenmaske in einigem Abstand von der Leuchtstoffschicht angebracht. Durch diese Schattenmaske wird die Leuchtstoffschicht mit ultraviolettem Licht bestrahlt, wodurch die bestrahlten Bereiche der Leuchtstoffschicht aushärten. Mit warmem Wasser wird die Leuchtstoffschicht entwickelt, d.h. die nicht ausgehärteren Teile der Leuchtstoffschicht entfernt. Die strukturierte Leuchtstoffschicht wird getrocknet.

Diese Prozeßschritte werden nacheinander mit drei Leuchtstoffzubereitungen mit Leuchtstoffen in den Emissionsfarben Grün, Blau und Rot durchgeführt. Dann wird der Bildschirm bei circa 440 °C ausgeheizt, um den in der Leuchtstoffschicht verbliebenen organischen Binder zu entfernen.

### Ausführungsbeispiel 1

800 g grün leuchtendes ZnS:Cu,Au,Al wird nach dem Waschen mit Wasser und Naßsieben dekantiert. Mit verdünntem Ammoniak wird ein pH-Wert von 9.3 eingestellt. Es werden 10.67 g einer 3.0%igen Lösung eines feinteiligen SiO₂-Kolloides mit einer Teilchengröße von 4 nm ≤ d ≤ 30 nm als Dispergiermittel hinzugefügt. Nach Hinzufügen von Mahlkörpern wird diese Leuchtstoffsuspension naßgemahlen. Nach einstündigem Mahlen wird der pH-Wert mit verdünntem Ammoniak auf pH 9.0 nachgestellt. Nach einer weiteren Stunde Naßmahlen werden die Mahlkörper abgetrennt und mit Wasser auf ein Suspensionsvolumen von 2.41 verdünnt. Nach dem Naßsieben erhält man die stabilisierte Leuchtstoffsuspension. Der gut dispergierten Suspension des ZnS:Cu,Au,Al-Leuchtstoffes mit einem pH-Wert von 8.0 wird 48.1 g einer 1.0%igen Harnstoff-Formaldehyd-Harz-Lösung hinzugefügt. Die Leuchtstoffsuspension wird 10 Minuten lang gerührt. Währenddessen wird zu 106.7 g einer 3.0%igen Lösung eines grobteiligen SiO₂-Kolloides mit einer Teilchengröße von 50 nm ≤ d ≤ 150 nm langsam 8.0 g einer 10%igen Y(NO₃)₃-Lösung (berechnet als Y₂O₃) hinzugefügt, wobei ihr pH-Wert von 9.9 auf 6.0 fällt. Dieses mit Yttrium modifizierte Kieselsol wird anschließend der Leuchtstoffsuspension hinzugefügt, wobei deren pH-Wert auf pH 6.2 abgesenkt wird. Nach weiteren 5 Minuten Rühren werden der Leuchtstoffsuspension 12.0 g einer 4.0%igen ZnSO₄-Lösung (berechnet als ZnO) hinzugefügt. Die Leuchtstoffsuspension wird wiederum 5 Minuten gerührt.

Dann wird mit 1 molarer H₂SO₄ ein pH-Wert von 3.5 eingestellt. Nach 10 Minuten Rühren wird mit verdünntem Ammoniak der pH-Wert auf 8.5 angehoben. Nachdem die Leuchtstoffsuspension weitere 15 Minuten gerührt wurde, läßt man die Suspension des beschichteten ZnS:Cu,Au,Al-Leuchtstoffes sedimentieren, dekantiert und wäscht einmal mit 1.6 Liter Wasser. Schließlich wird der beschichtete Leuchtstoff abfiltriert und 16 Stunden bei 120 5C an Luft getrocknet.

### Ausführungsbeispiel 2

800 g grün leuchtendes ZnS:Cu,Au,Al wird wie in Ausführungsbeispiel 1 mit 10.67 g einer 3.0%igen Lösung eines feinteiligen SiO₂-Kolloids mit einer Teilchengröße von 4 nm ≤ d ≤ 30 nm als Dispergiermittel dispergiert. Der gut dispergierten Suspension des ZnS:Cu,Au,Al-Leuchtstoffes mit einem pH-Wert von 8.1 wird 32.0 g einer 1%igen Lösung eines Polyurethanharzes mit Molekülmasse < 10000 hinzugefügt. Die Leuchtstoffsuspension wird 10 Minuten lang gerührt. Währenddessen wird zu 106.7 g einer 3.0%igen Lösung eines grobteiligen SiO₂-Kolloids mit einer mittleren Teilchengröße 50 nm ≤ d ≤ 150 nm langsam 8.0 g einer 10.0%igen Y(NO₃)₃-Lösung (berechnet als Y₂O₃) hinzugefügt, wobei ihr pH-Wert von 9.9 auf 6.1 fällt. Dieses mit Yttrium modifizierte Kieselsol wird anschließend der Leuchtstoffsuspension hinzugefügt, wobei deren pH-Wert auf pH 6.3 abgesenkt wird. Nach weiteren 5 Minuten Rühren werden der Leuchtstoffsuspension 12.0 g einer 4.0%igen ZnSO4-Lösung (berechnet als ZnO) hinzugefügt, wodurch der pH-Wert auf pH 5.5 fällt. Dann wird mit 1 molarer H₂SO₄-Lösung ein pH-Wert von 3.5 eingestellt. Nach 10 Minuten Rühren wird mit verdünntem Ammoniak der pH-Wert auf 8.5 angehoben. Nachdem die Leuchtstoffsuspension weitere 15 Minuten gerührt wurde, wird der beschichtete Leuchtstoff wie in Ausführungsbeispiel 1 aufgearbeitet.

### Ausführungsbeispiel 3

800 g grün Leuchtendes ZnS:Cu,Au,Al wird wie in Ausführungsbeispiel 1 mit 10.67 g einer 3.0%igen Lösung eines feinteiligen SiO₂-Kolloids mit einer Teilchengröße von 4 nm ≤ d ≤ 30 nm als Dispergiermittel dispergiert. Der gut dispergierten Suspension des ZnS:Cu,Au,Al-Leuchtstoffes mit einem pH-Wert von 8.5 wird 25.8 g einer 1%igen Lösung einer Polyacrylsäure mit Molekülmasse 75 000 hinzugefügt, wodurch der pH-Wert auf pH 6.1 fällt. Die Leuchtstoffsuspension wird 5 Minuten gerührt. Dann wird 30.4 g einer heißen 0.5%igen Natriumalginat-Lösung der Leuchtstoffsuspension hinzugefügt und wiederum 5 Minuten gerührt. Es werden 87.9 g einer 3.0%igen Lösung eines grobteiligen SiO₂-Kolloids mit einer mittleren Teilchengröße 50 nm ≤ d ≤ 150 nm der Leuchtstoffsuspension hinzugefügt und wieder 10 min gerührt. 28.0 g einer 10.0%igen Y(NO₃)₃-Lösung ( berechnet als Y₂O₃) und 24.0 g einer 4.0%igen Zn(NO₃)₂-Lösung (berechnet als ZnO) werden separat gemischt und danach der Leuchtstoffsuspension hinzugefügt. Dabei fällt der pH-Wert auf pH 3.6. Die Leuchtstoffsuspension wird 10 Minuten gerührt. Mit verdünntem Ammoniak wird schließlich der pH-Wert auf pH 8.5 angehoben. Nachdem die Leuchtstoffsuspension weitere 15 Minuten gerührt wurde, läßt man die Suspension des beschichteten ZnS:Cu,Au,Al-Leuchtstoffes sedimentieren, dekantiert und wäscht 3 Mal mit 1.6 Liter Wasser. Schließlich wird der beschichtete Leuchtstoff abfiltriert und 18 Stunden bei 120 °C an Luft getrocknet.

### Meßergebnisse

Die Haftung von Leuchtstoffzubereitungen auf einem Bildschirm werden gemessen, indem man Leuchtstoffschichten mit den Leuchtstoffzubereitungen durch ein Flow-Coating-Verfahren auf das Schirmglas aufbringt. Die Leuchtstoffschichten werden in einem Muster mit abnehmender Linienbreite aufgebracht und anschließend mit Wasser gespült. Die Breite der schmalsten Linien, die gerade noch haften bleiben , werden gemessen und verglichen. Je kleiner die minimale Linienbreite, um so besser ist die Haftung der Leuchtstoffzubereitung auf dem Bildschirmglas.

Fig. 1 veranschaulicht den positiven Einfluß erfindungsgemäßer Leuchtstoffzubereitungen mit grün leuchtendem ZnS:Cu,Au,Al-Leuchtstoff auf die Haftung der Leuchtstoffschicht auf dem Schirmglas. Sowohl vollkommen anorganische Beschichtungszusammensetzungen aus SiO₂ und ZnO (Beschichtung X) als auch Beschichtungszusammensetzungen aus SiO₂ und ZnO mit zusätzlichem organischen Bindet (Beschichtung ▲) als auch den erfindungsgemäßen Beschichtungen ähnliche, jedoch außer SiO₂, ZnO und organischem Binder, Lanthanoxid an Stelle von Yttriumoxid enthaltende Beschichtungen (Beschichtung ●) sind in der Leuchtstoffhaftung der Leuchtstoffzubereitung, die eine Yttrium-Sauerstoff-Verbindung enthält (Beschichtung ■), unterlegen.

## Patentansprüche

1. Bildschirm mit einer Leuchtstoffzubereitung, die einen Leuchtstoff und eine Leuchtstoffbeschichtung mit einer Gruppe von Metall-Sauerstoff-Verbindungen umfaßt,
dadurch gekennzeichnet,
daß die Gruppe der Metall-Sauerstoff-Verbindungen eine Yttrium-Sauerstoffverbindung enthält.

2. Bildschirm mit einer Leuchtstoffzubereitung gemäß Anspruch 1,
dadurch gekennzeichnet,
daß die Gruppe der Metall-Sauerstoff-Verbindungen eine Zink-Sauerstoff-Verbindung enthält.

3. Bildschirm mit einer Leuchtstoffzubereitung gemäß Anspruch 1,
dadurch gekennzeichnet,
daß die Gruppe der Metall-Sauerstoff-Verbindungen eine Erdalkalimetall-Sauerstoff-verbindung enthält.

4. Bildschirm mit einer Leuchtstoffzubereitung gemäß Anspruch 1,
dadurch gekennzeichnet,
daß die Gruppe der Metall-Sauerstoff-Verbindungen eine Silizium-Sauerstoffverbindung enthält.

5. Bildschirm mit einer Leuchtstoffzubereitung gemäß Anspruch 1,
dadurch gekennzeichnet,
daß die Leuchtstoffzubereitung Yttriumoxid, Zinkkoxid und ein kolloidales Siliziumoxid enthält.

6. Bildschirm mit einer Leuchtstoffzubereitung gemäß Anspruch 1,
dadurch gekennzeichnet,
daß die Leuchtstoffzubereitung 0.01 bis 0.50 Gew.-% Yttrium-Sauerstoff-Verbindung bezogen auf den Leuchtstoffanteil enthält.

7. Bildschirm mit einer Leuchtstoffzubereitung gemäß Anspruch 1,
dadurch gekennzeichnet,
daß die Leuchtstoffzubereitung 0.01 bis 0.50 Gew.-% einer Erdalkalimetall-Sauerstoff-Verbindung, bezogen auf den Leuchtstoffanteil, 0.01 bis 0.50 Gew.-% einer Zink-Sauerstoff-Verbindung, bezogen auf den Leuchtstoffanteil, 0.01 bis 0.50 Gew.-% einer Yttrium-Sauerstoff-Verbindung, bezogen auf den Leuchtstoffanteil, und 0.01 bis 1.0 Gew.-% einer Silizium-Sauerstoffverbindung, bezogen auf den Leuchtstoffanteil, enthält.

8. Leuchtstoffzubereitung, die einen Leuchtstoff und eine Leuchtstoffbeschichtung mit einer Gruppe von Metall-Sauerstoff-Verbindungen umfaßt,
dadurch gekennzeichnet,
daß die Gruppe der Metall-Sauerstoff-Verbindungen Yttriumoxid enthält.
